# EUROPÄISCHE PATENTSCHRIFT

(11) **EP 3 711 909 B1**
(45) Veröffentlichungstag und Bekanntmachung des Hinweises auf die Patenterteilung: **30.10.2024**
(21) Anmeldenummer: 20163865.7
(22) Anmeldetag: 18.03.2020
(51) Int. Cl.: B25J 9/16, G05B 19/401

(54) **VERFAHREN ZUR DURCHFÜHRUNG ZUMINDEST EINES TÄTIGKEITSPROZESSES MITTELS EINES ROBOTERS**
METHOD FOR PERFORMING AT LEAST ONE ACTIVITY PROCESS USING A ROBOT
PROCÉDÉ DE MISE EN OEUVRE D'AU MOINS UN PROCESSUS D'ACTIVITÉ AU MOYEN D'UN ROBOT

(30) Priorität: 22.03.2019 DE 102019107417
(43) Veröffentlichungstag der Anmeldung: 23.09.2020
(73) Patentinhaber: Battenberg, Günther, 35274 Kirchhain (DE)
(72) Erfinder: Battenberg, Günther, 35274 Kirchhain (DE)
(74) Vertreter: Stoffregen, Hans-Herbert

(56) Entgegenhaltungen:
- EP-A1- 2 322 897
- EP-A2- 1 043 642
- EP-A2- 2 216 144
- DE-A1- 102006 005 990
- DE-A1- 102010 015 031
- DE-A1- 102017 103 115
- DE-B4- 102007 033 486

## Beschreibung

Die Erfindung bezieht sich auf ein Verfahren zur Durchführung von zumindest einem Tätigkeitsprozess in Form eines Messens mittels eines Roboters an einem Objekt in Form eines Fahrzeugs, wobei das Messen eine Qualitätsprüfung ist.

In insbesondere automatisierten Produktionsbetrieben, in denen mittels Roboter Tätigkeiten wie Montagearbeiten oder auch Qualitätsüberprüfungen durchgeführt werden, muss die genaue Lage des Objektes oder eines Objektbereichs, an oder in dem eine Tätigkeit durchzuführen ist, in Roboterkoordinaten bekannt sein. Dies bereitet dann keine Probleme, wenn die Position des Objektes in Bezug auf den Roboter eindeutig vorgegeben ist. Etwaige Abweichungen führen jedoch dazu, dass Tätigkeiten fehlerhaft ausgeführt werden können.

Gegenstand der DE 690 32 185 T2 sind ein Verfahren und eine Vorrichtung zur Kontrolle der Bearbeitungsspur eines Industrieroboters.

Nach der DE 10 2015 007 829 B4 wird ein Werkstück von einem Roboter gehalten, um auf der Basis der CAD-Daten des Werkstücks Arbeiten durchzuführen.

Die DE 10 2016 114 337 A1 bezieht sich auf ein System und ein Verfahren zum Verknüpfen von Koordinatenräumen.

Ein Industrieroboter nach der DE 10 2007 09 851 B3 weist eine 2D-Kamera auf, die in zumindest zwei unterschiedlichen Positionen bewegt wird, um die Lage relativ zu einem Objekt zu bestimmen.

Eine Vorrichtung zur Kalibrierung eines Industrierobotersystems ist aus der EP 2 350 750 B1 bekannt.

Der DE 10 2006 005 990 A1 ist eine Werkstückvermessung für 3-D Lageerkennung in mehreren Multi-Roboter-Systemen zu entnehmen.

Der DE 10 2010 015 031 A1 sind ein Verfahren und eine Vorrichtung zur lagegenauen Durchführung eines Prozesses an einer Kraftfahrzeugkomponente zu entnehmen.

Der EP 1 043 642 A2 ist ein Robotersystem zu entnehmen, bei dem zur Erfassung von willkürlich angeordneten Gegenständen eine Grob- und eine Feinlokalisierung erfolgen.

EP 2 216 144 A2 offenbart ein Verfahren und System zur Kontrolle von Bauteilen und/oder Funktionseinheiten.

Der vorliegenden Erfindung liegt die Aufgabe zugrunde, ein Verfahren der eingangs genannten Art so weiterzubilden, dass mit einfachen Maßnahmen und kostengünstig eine eindeutige Ausrichtung des Roboters zu dem Objekt bzw. Objektbereich erfolgen kann, um erforderliche Tätigkeiten auszuüben.

Zur Lösung der Aufgabe wird ein Verfahren nach Anspruch 1 vorgeschlagen.

Insbesondere wird das Lokalisieren zum Ermitteln der zweiten Daten berührungslos, insbesondere optisch oder mittels Ultraschall, unter Verwendung eines oder mehrerer Sensoren durchgeführt, wobei zum Lokalisieren ein von dem Roboter ausgehender Prüf- oder Messkopf, insbesondere Multisensormesskopf, verwendet wird, wobei der zumindest eine erste Sensor ein Sensor aus der Gruppe optischer Sensor, wie Kamera, insbesondere 2D-Kamera, 3D-Scanner, Time-Of-Flight-Sensor, Laserliniensensor, Abstandssensor, wie Laserabstandssensor, Ultraschallabstandssensor, ist.

Nach einem Aspekt der Erfindung ist vorgesehen, dass aus einer durch die ersten und zweiten Daten ermittelten 6D-Lage des Objekts bzw. Objektbereichs der den Tätigkeitsprozess durchführende Roboter oder Teil dieses zu einem durch erste Daten bestimmten Bereich des Objekts bewegt wird und den Tätigkeitsprozess durchführt, wobei vorzugsweise bei bewegtem Objekt fortwährend das Objekt lokalisiert wird oder bei Bekanntsein von Bewegungsvektor und Geschwindigkeit eines bewegten Objekts nach erfolgter Lokalisierung dieses weitere Lokalisierungen nicht oder im geringen Umfang erforderlich sind.

Die Lage eines Objekts bzw. Objektbereichs - nachstehend zum Teil vereinfacht nur als Objekt bezeichnet - wird basierend auf einem CAD-Modell des Objekts ermittelt. Hierzu erfolgt ein Abgleich der als erste Daten bezeichneten Daten des CAD-Modells mit dem Bild bzw. durch Messen ermittelte Messpunktwolke des realen Objekts als zweite Daten, wodurch die Lage des Objekts zu dem Roboter lokalisiert wird, um sodann den Roboter bzw. einen Teil dieses, wie einen Roboterarm, auf den Bereich des Objektes auszurichten, in dem eine Tätigkeit durchgeführt werden soll.

So können z.B. eine Kante oder Fläche des Objekts detektiert und mit den entsprechenden bekannten CAD-Daten gemacht werden.

Zum Lokalisieren wird insbesondere ein Multisensorkopf benutzt, der von einer Roboterflanschplatte ausgeht, wobei der Multisensorkopf ein oder mehrere Montageplätze für optische Sensoren wie Laserabstandssensor, 3D-Scanner, Time-Of-Flight-Sensor, 2D-Liniensensor, 2D-Kamera, aufweist, die die Funktion von Lokalisierungssensoren ausüben, um also das Objekt zu erfassen und mit den CAD-Daten abzugleichen.

Zur Durchführung des Tätigkeitsprozesses müssen Position und Orientierung des Objektes in Roboterkoordinaten zu jedem Zeitpunkt zur Verfügung stehen.

Geht bevorzugterweise der Lokalisierungssensor vom Roboter selbst aus, so besteht jedoch auch die Möglichkeit, z.B. einen optischen Sensor wie 3D-Kamera stationär in dem Bereich zu positionieren, in dem sich das Objekt befindet. Die durch die 3D-Kamera gelieferte Punktwolke ermöglicht - wie durch den bzw. die von dem Roboter ausgehenden Lokalisierungssensoren - die 6D-Lage des Objektes unter Einsatz einer geeigneten Software zu bestimmen. Dabei kann z.B. eine Kantendetektion oder Flächendetektion bei einer 3D-Kamera oder Kantendetektion bei 2D-Sensoren, Flächendetektion bei Verwendung z.B. eines 3D-Scanners oder durch Bildverarbeitung die Lage des Objektes ermittelt werden.

Um die Tätigkeit durchzuführen, werden erste Daten, also im CAD-Modell definierte Messpositionen, in Roboterkoordinaten, also zweiten Koordinaten, mit für die Messaufgabe ausreichender Genauigkeit zur Verfügung gestellt. Die so ermittelten Ist-Daten, also zweiten Daten, werden sodann zum Durchführen der Tätigkeit benutzt, ohne dass Änderungen am Messkopf vorzunehmen sind, da dieser neben einem oder mehreren Lokalisierungssensoren auch ein Werkzeug wie Sauger oder Greifer oder Spaltmesswerkzeug, wie Laserliniensensor, aufweist, der insbesondere bezüglich der Roboterflanschplatte von einem bezüglich der Roboterflanschachse mittigen Montageplatz ausgeht.

Es erfolgt eine Verknüpfung der im CAD-Modell definierten Messposition mit den durch zumindest einen Lokalisierungssensor ermittelten Messergebnissen mittels einer geeigneten Software.

Das Lokalisieren wird mehrstufig durchgeführt. So wird in einem ersten Schritt eine grobe Lokalisierung von dem Objekt relativ zum Roboter durch Abgleich des CAD-Modells mit dem Bild bzw. Punktwolke des bzw. der Lokalisierungssensoren erfolgen. Es wird ein modellbasierter Fit durchgeführt.

Eine feine Lokalisierung wird durch Messung einer oder mehrerer lokaler Merkmale am Objekt vorgenommen werden, z.B. Mittelpunktbestimmung, Ebenenbestimmung durch Abstandsmessung, Winkelmessung. Hierdurch wird das die Tätigkeit ausübende Element, das vom Roboter ausgeht, hochpräzise auf den Bereich des Objekts ausgerichtet, in oder an dem die Tätigkeit durchzuführen ist.

Die Daten des von dem Roboter ausgehenden bzw. am Roboterflansch montierten Lokalisierungssensors können mit einem oder mehreren externen Sensoren verknüpft werden, um eine hohe Genauigkeit zu erzielen. Alternativ können auch Daten mehrerer von dem Roboter ausgehender Lokalisierungssensoren benutzt werden.

Erfindungsgemäß wird zur Durchführung einer Tätigkeit ein Roboter, insbesondere Sechsachs-Industrieroboter eingesetzt, wobei eine modellbasierte Lokalisierung des Roboters relativ zu einem Objekt erfolgt, an dem eine Tätigkeit durchzuführen ist. Die Ergebnisse der Tätigkeit können visualisiert werden. So können z.B. die abgeschlossenen Tätigkeiten als Bild dem CAD-Modell des Bereichs, in dem die Tätigkeit durchzuführen war, überlagert werden. Auch kann ein reales Bild des Bereichs von dem CAD-Modell des Bereichs überlagert werden.

Eine Augmented Reality (AR) - oder Virtual Reality (VR) - Visualisierung ist möglich.

Die erfindungsgemäße Lehre wird durch den Tätigkeitsprozess Messen verwirklicht. Messen kann die Qualitätsprüfung von z.B. Fahrzeuginterieurkomponenten, wie Haptikmessen und Funktionsprüfen von Klimabediengeräten, Infotainment-Systemen, Ausströmern, Touchpanelsätzen etc. sein. Dabei kann ein Kraft/Drehmomentsensor des Roboters benutzt werden, von dem der Sensorkopf ausgeht. Dabei ist der Kraft/Drehmomentsensor insbesondere zwischen der Adapterplatte und dem Sensorkopf bzw. dem Roboterflansch angeordnet.

Andere Messungen wie Steifigkeitsmessungen an z.B. Karosserien mit Kraft/Drehmomentsensor, Spaltmessung an Karosserien mit Laserliniensensor, Tür- und Klappenprüfung mit Kraft/Drehmomentsensor und Liniensensor an Fahrzeugexterieurkomponenten sind ebenfalls möglich.

Es besteht jedoch auch die Möglichkeit, die von dem zumindest einen ersten Sensor, der von dem Roboter ausgeht, ermittelten Daten zur Steuerung eines weiteren Roboters, z.B. zur Durchführung eines weiteren Tätigkeitsprozesses, zu verwenden, der z.B. nach Einsetzen einer Fahrzeugleuchte durch den ersten Roboter das Befestigen ausführt.

Ist das Objekt bewegt, wird dieses fortwährend lokalisiert. Sind Bewegungsvektor und Geschwindigkeit des bewegten Objekts bekannt, so reicht es grundsätzlich aus, dass nach einer einmal erfolgten Lokalisierung weitere Messungen unterbleiben. Um jedoch mögliche Abweichungen des Bewegungsvektors bzw. der Geschwindigkeit zu erfassen, kann in zeitlichen Abständen erneut eine Lokalisierung erfolgen.

Zur Durchführung des Verfahrens kann ein Prüfkopf verwendet werden, der an einem Roboter bzw. Roboterflansch befestigt ist, wobei als Prüfkopf ein solcher mit einem vorzugsweise zylinderförmigen Basiskörper verwendet wird, der lösbar mit dem Roboter bzw. dem Roboterflansch verbunden ist, wobei vom Basiskörper bzw. dessen Stirnbereich eine Adapterplatte mit einem Werkzeug, wie Haptikwerkzeug und/oder einem Sauger und/oder einem Greifer und/oder einem optischen Sensor, ausgeht, wobei insbesondere zwischen der Adapterplatte und dem Basiskörper ein Kraft/Drehmomentsensor angeordnet ist, und wobei das Werkzeug peripher umgeben ist von mehreren Montageflächen für eine Beleuchtung und/oder einen für eine oder mehrere optische Sensoren wie 2D-Kamera, 3D-Scanner, Time-Of-Flight-Sensor, Laserabstandssensor, 2D-Liniensensor.

Ferner können von dem Basiskörper, insbesondere dessen Umfangswandung, ein oder mehrere Druckluftanschlüsse zum Verbinden mit dem Werkzeug, wie Sauger und/oder Greifer, ausgehen.

Erfindungsgemäß erfolgt eine 6D-Lageerkennung eines gegebenenfalls bewegten Objekts, um an diesem auf der Basis von CAD-Daten des Objekts Tätigkeiten durchzuführen, wobei die Lageerkennung mittels Verknüpfung von Daten des realen Objekts, die von einem oder mehreren von dem Roboter ausgehenden Sensoren ermittelt werden, mit CAD-Daten des Objektes erfolgt.

Es besteht die Möglichkeit, dass nach Durchführung der Tätigkeit zweite Daten des Bereichs, in dem die Tätigkeit durchgeführt worden ist, z.B. mittels eines Laserliniensensors ermittelt werden, um unter Berücksichtigung der zweiten Daten die den Bereich im CAD-Modell betreffenden ersten Daten derart zu beeinflussen, dass bei Tätigkeiten an weiteren Objekten etwaige zuvor festgestellte Abweichungen des Objekts vom CAD-Modell berücksichtigt werden. Es erfolgt quasi eine Rückkopplung.

Weitere Einzelheiten, Vorteile und Merkmale der Erfindung ergeben sich aus der nachfolgenden Beschreibung und Zeichnung zu entnehmenden bevorzugten Ausführungsbeispielen.

Es zeigen:
- Fig. 1: eine Prinzipdarstellung einer Anordnung mit einem Objekt, an dem mittels eines Roboters zumindest eine Tätigkeit ausgeübt werden soll,

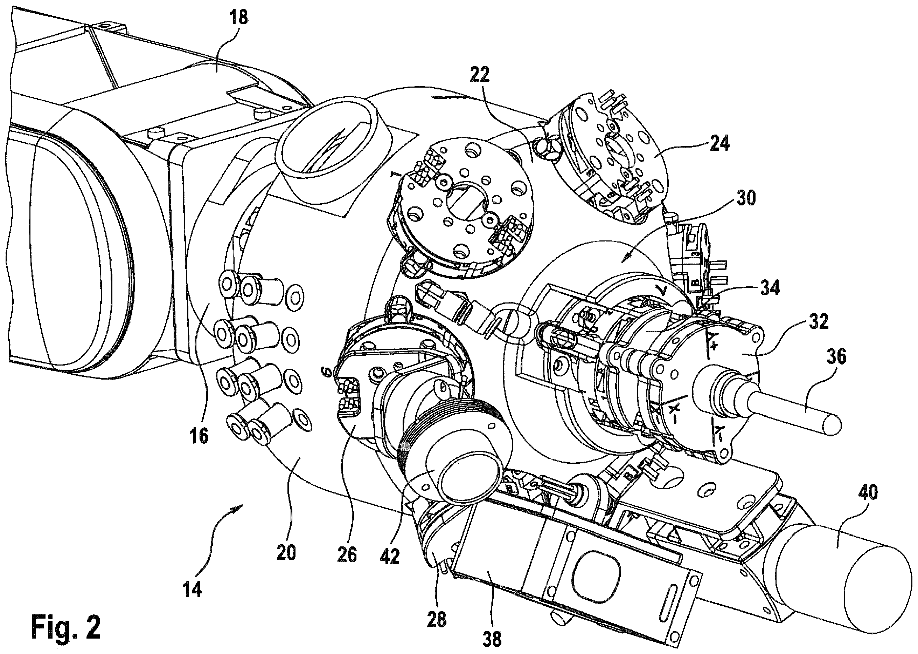

- Fig. 2: einen Prüfkopf in perspektivischer Darstellung,

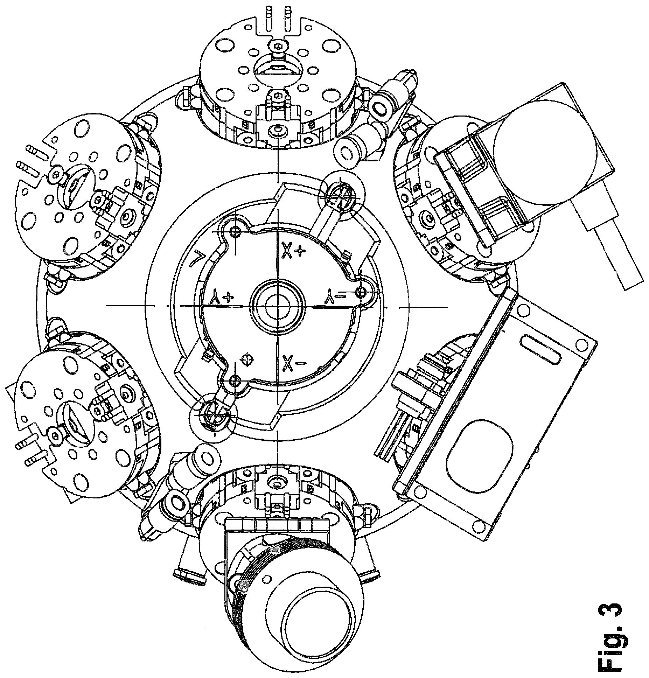

- Fig. 3: den Prüfkopf in Vorderansicht,
- Fig. 4: ein Verfahrensschema zur Durchführung einer Tätigkeit und
- Fig. 5: ein Verfahrensschema zur Darstellung der durchgeführten Tätigkeit.

Anhand der Figuren soll rein prinzipiell ein Verfahren verdeutlicht werden, aufgrund dessen an einem Fahrzeug 10 (Objekt) mittels eines Roboters 12, wie Sechs-Achsroboter, eine oder mehrere Tätigkeiten in Form von Messen durchzuführen sind.

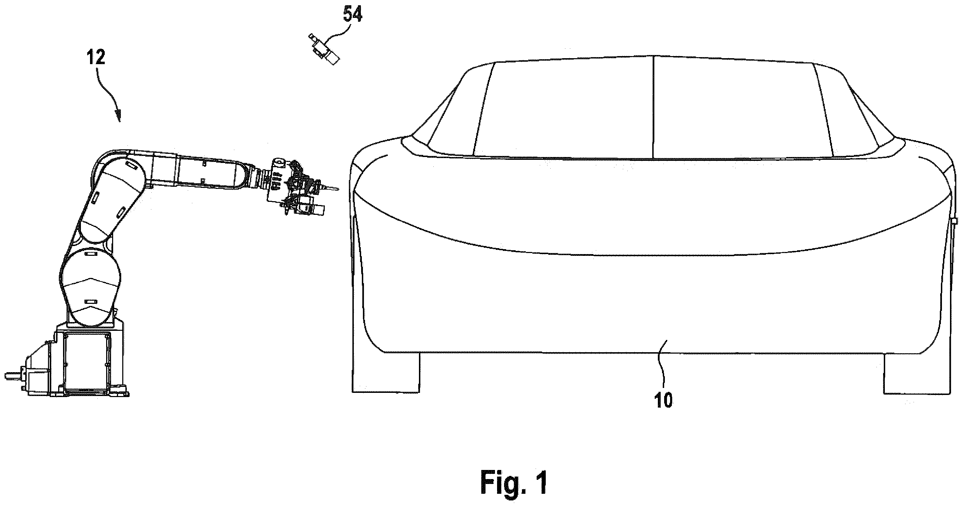

Ist in Fig. 1 das Objekt 10 als Kraftfahrzeug dargestellt, so soll hierdurch die Lehre der Erfindung nicht eingeschränkt werden. Daher wird nachstehend sowohl von Objekt als auch von Fahrzeug gesprochen. Die Begriffe schließen auch Bereiche des Objekts bzw. Fahrzeugs ein.

Erfindungsgemäß erfolgt eine Tätigkeit mit dem Sechsachsroboter bzw. Industrieroboter 12 an dem Objekt, also Fahrzeug 10, unter Berücksichtigung der Daten des CAD-Modells des Objekts 10, die in die Roboterdaten als zweite Daten transformiert werden. Dabei wird zur Durchführung der Tätigkeit ein Bereich im CAD-Modell vorgegeben, um den Roboter bzw. ein von diesem ausgehendes Werkzeug oder einen Sensor auf diesen Bereich auszurichten und sodann die gewünschte Tätigkeit durchzuführen. Voraussetzung hierfür ist es jedoch, dass die eindeutige 6D-Lage des Objektes 10 bekannt ist. Hierzu werden Lokalisierungssensoren benutzt, die bevorzugterweise von dem Roboter 12 ausgehen, und zwar von einem Multisensorprüf- oder Messkopf 14 - nachstehend vereinfacht Multisensorprüfkopf genannt -, der mit einem Roboterflansch 16 verbunden ist. Der Multisensorprüfkopf 14 weist einen im Ausfiihrungsbeispiel zylindrischen Basiskörper 16 auf, von dessen vorzugsweise eine konusförmige Geometrie aufweisenden Stirnbereich 22 mehrere Montageplätze ausgehen, von denen einige mit dem Bezugszeichen 24, 26, 28, 30 gekennzeichnet sind.

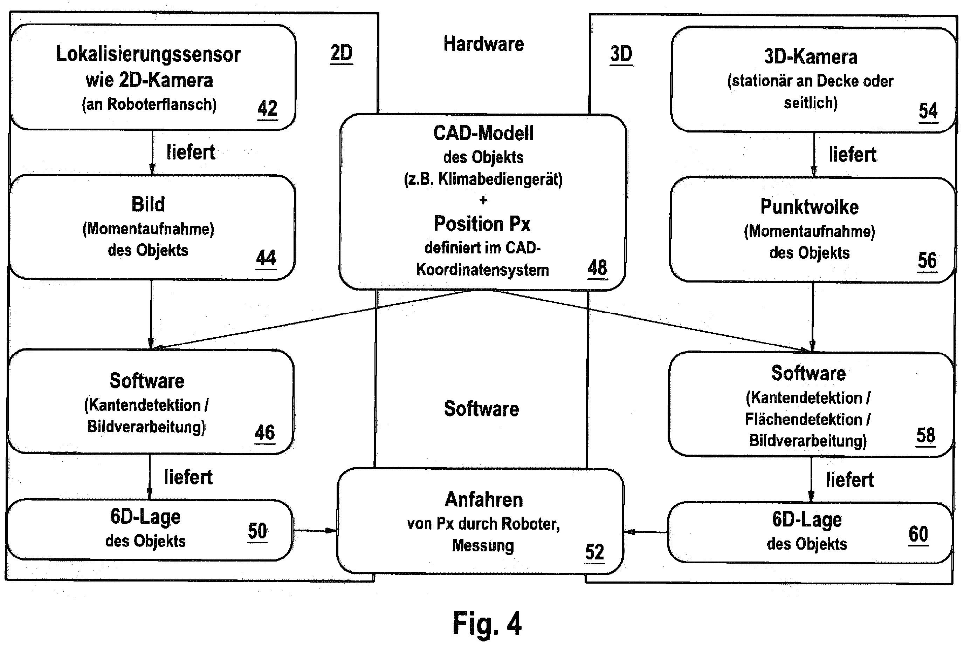

Dabei ist der Montageplatz 30 zentral angeordnet und wird von der Roboterflanschachse mittig durchsetzt. Mit dem Montageplatz 30 ist eine Adapterplatte 32 verbunden, wobei zwischen dieser und der Montagefläche ein Kraft/Drehmomentsensor 34 angeordnet ist. Von der Adapterplatte 32 geht im Ausführungsbeispiel ein Werkzeug, wie Haptikmesswerkzeug oder Sauger oder Greifer oder ein optischer Sensor, aus, um die Tätigkeit durchzuführen. Mit einem oder mehreren der anderen Montageplätze 24, 26, 28 können Lokalisierungssensoren wie Laserabstandssensor 38 oder 2D-Laserliniensensor oder ein optischer Sensor 40, wie 2D-Kamera, 3D-Scanner, Time-Of-Flight-Sensor bzw. Kamera, angeordnet werden. Von einem Montageplatz, und zwar im Ausführungsbeispiel von dem Montageplatz 26, geht eine Beleuchtung 42 aus. Allerdings geht von zumindest einem der Montageplätze ein Lokalisierungssensor aus, wie der Sensor 38 und/oder der Sensor 40. Der Lokalisierungssensor ist dazu bestimmt, um die Position des Objektes bzw. eines Bereiches zu lokalisieren, um sodann unter Berücksichtigung des CAD-Modells des Objekts 10 die 6D-Lage des Objektes 10 zu ermitteln. Zur Lokalisierung wird zumindest ein 2D-Verfahren, gegebenenfalls eine Kombination aus einem 2D- und einem 3D-Verfahren, durchgeführt, wie dies anhand der Fig. 4 rein prinzipiell verdeutlicht wird.

So ist beispielhaft eine 2D-Kamera, die mittelbar oder unmittelbar von dem Roboterflansch 14 ausgeht, als Lokalisierungssensor angegeben (Kasten 42).

Mittels der 2D-Kamera wird eine Momentaufnahme des Objekts 10 aufgenommen (Kasten 44). Von dem Objekt 10 steht ein CAD-Modell zur Verfügung bzw. der Bereich, in oder bei dem eine Tätigkeit durchzuführen ist, wie z.B. ein Klimabediengerät (Kasten 48). Mittels der Software können sodann als erste Daten die Daten des CAD-Modells mit den Daten als zweite Daten, die mit dem einen oder mehreren Lokalisierungssensor ermittelt werden, verknüpft werden, um die 6D-Lage des Objekts in Roboterkoordinaten zur Verfügung zu stellen. Der Bereich (Position Px), in dem eine Tätigkeit durchzuführen ist, ist im CAD-Koordinatensystem definiert und wird mittels der Software in die Roboterkoordinaten nach erfolgter Lagebestimmung des Objekts transformiert. Sodann kann der Roboter auf die Position Px ausgerichtet werden (Kasten 52).

Ergänzend oder alternativ kann auch eine 3D-Kamera benutzt werden (Kasten 54), die z.B. stationär in dem Raum angeordnet ist, in dem sich das Objekt 10 befindet. Die 3D-Kamera liefert eine Punktwolke, d.h. Momentaufnahme des Objekts (Kasten 56), um sodann unter Zugrundelegung der diesbezüglichen Daten unter Berücksichtigung der CAD-Daten mittels einer Software (Kasten 58) die 6D-Lage des Objektes (Kasten 60) zu ermitteln, um entsprechend den zuvor erfolgten Erläuterungen den Roboter 12 bzw. den Multisensorkopf 14 auf den Bereich des Objekts 10 auszurichten, in oder an dem eine Tätigkeit durchzuführen ist.

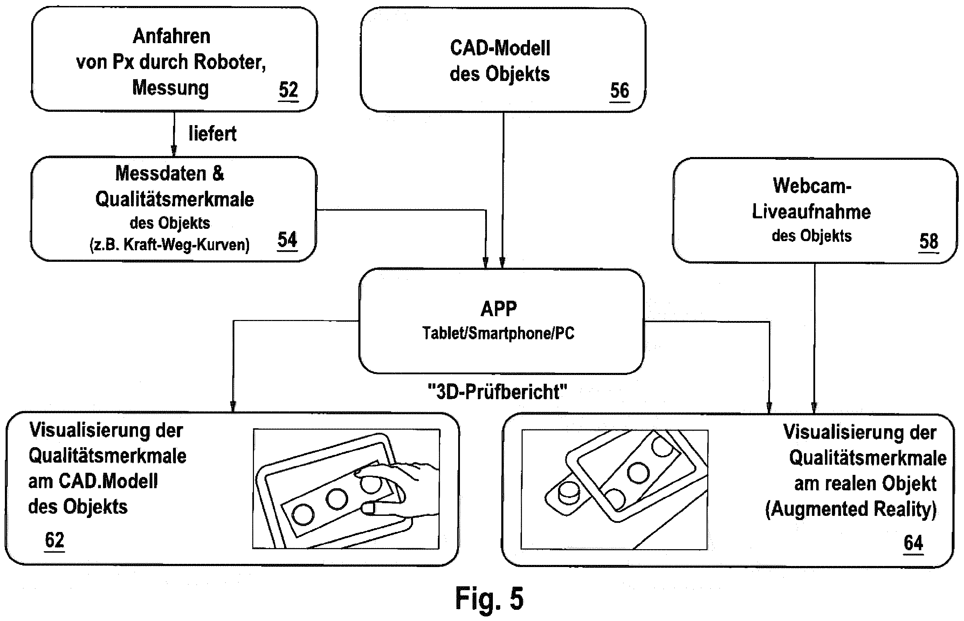

Um durchgeführte Tätigkeiten zu überprüfen oder um unabhängig hiervon Messungen durchzuführen, werden entsprechend der Fig. 5 nach dem Anfahren an den Bereich der Koordinaten Px (Kasten 52) mittels des Roboters 12 z.B. Messdaten und Qualitätsmerkmale des Objekts (Kasten 54) ermittelt, z.B. Kraft-Weg-Kurven zur Bestimmung der Steifigkeit z.B. an der Karosserie eines Fahrzeuges.

Mittels z.B. einer App können die Daten des CAD-Modells (Kasten 56) und die mittels eines optischen Sensors wie Lokalisierungssensor oder Webcam ermittelten Daten (Kasten 58) des realen Objektbereichs, in oder an dem Tätigkeiten durchgeführt worden sind, wie Messdaten, Qualitätsmerkmale, wie Spaltmaß, genutzt werden, um eine AR (Augmented Reality) oder VR (Virtual Reality) Visualisierung zu ermöglichen. Dies wird anhand der Kästen 62 und 64 verdeutlicht. So ist im Kasten 62 die Möglichkeit der Visualisierung der Messdaten, wie Qualitätsmerkmale, am CAD-Modell auf z.B. einem Tablet dargestellt. Im Kasten 64 ist die Visualisierung der Qualitätsmerkmale entsprechend dem CAD-Modell am realen Objekt dargestellt, d.h., dass jeweils eine Überlagerung des realen Bildes mit virtuellen Informationen erfolgt.

Erfindungsgemäß wird somit eine Tätigkeit in Form eines Messens mit einem Sechsachsroboter durchgeführt, wobei ein CAD-Modell-basiertes Lokalisieren des Sechs-Achsroboters relativ zu einem Objekt erfolgt, um z.B. sodann eine benutzereinstellbare Visualisierung der Ergebnisse in AR oder VR zu ermöglichen.

Die gemessenen Abweichungen zwischen den Merkmalen am realen Objekt, also die IstWerte (zweite Daten), werden mit den vom CAD-Modell erhaltenen Soll-Daten (erste Daten) verglichen, um z.B. dann, wenn nach Messen an mehreren dem CAD-Modell entsprechenden Objekten gleichbleibende Abweichungen auftreten, eine Korrektur der CAD-Daten vorzunehmen, um eine Optimierung bei nachfolgenden Tätigkeiten an einem gleichen Objekt zu erreichen.

Vorteil der erfindungsgemäßen Lehre ist auch, dass Qualitätsmerkmale von unterschiedlichen Produktionsstätten miteinander verglichen werden, um unabhängig vom Montageort gleich gute Arbeitsergebnisse erzielen zu können. Eine Fernkontrolle von Qualitätsmerkmalen ist möglich.

Vorteil der erfindungsgemäßen Lehre ist auch, dass mit einem Prüfkopf sowohl eine Lokalisierung des Objektes als auch Tätigkeiten an diesem durchgeführt werden können, ohne dass Auswechslungen erfolgen müssen.

Die Möglichkeit einer Kombination von Messrobotik mit automatischer Lageerkennung bietet die erfindungsgemäße Lehre.

## Patentansprüche

1. Verfahren zur Durchführung von zumindest einem Tätigkeitsprozess in Form eines Messens mittels eines Roboters (12) an einem Objekt in Form eines Fahrzeugs (10), wobei das Messen eine Qualitätsprüfung ist, umfassend die Verfahrensschritte
- Zurverfügungstellung von ersten Daten in Form von Daten eines CAD-Modells des Objekts oder eines Objektbereichs oder eines Modells von dem Objekt oder dem Objektbereich in einem ersten Koordinatensystem,
- Lokalisieren des Objekts oder des Objektbereichs zur Ermittlung von zweiten Daten in einem zweiten Koordinatensystem mittels eines von dem Roboter ausgehenden zumindest einen ersten Sensor aufweisenden Prüfkopfs (14), wobei das zweite Koordinatensystem das des Roboters (12) ist,
- Transformieren der ersten Daten in das zweite Koordinatensystem,
- Bewegen des Roboters oder eines Teils von diesem in dem zweiten Koordinatensystem und
- Durchführen des zumindest einen Tätigkeitsprozesses an dem Objekt oder dem Objektbereich durch Vorgabe von in das zweite Koordinatensystem transformierten ersten Daten,
**dadurch gekennzeichnet, dass** das Lokalisieren mehrstufig derart durchgeführt wird, dass zunächst eine Groblokalisierung und sodann eine Feinlokalisierung durchgeführt wird, wobei die Groblokalisierung durch Abgleich von Daten des CAD-Modells mit Messwerten zumindest eines Lokalisierungssensors aus der Gruppe erster Sensor (38, 40), zweiter Sensor (54), der in einem das Objekt (10) umgebenden Raum stationär angeordnet ist, durchgeführt wird, und das Feinkalibrieren durch Messen von zumindest einem lokalen Merkmal des Objekts mittels des zumindest einen ersten Sensors durchgeführt wird, wobei eine Mittelpunktbestimmung, eine Ebenenbestimmung durch Abstandsmessung oder eine Winkelmessung am Objekt erfolgt.

2. Verfahren nach Anspruch 1,
**dadurch gekennzeichnet,**
**dass** das Lokalisieren zum Ermitteln der zweiten Daten berührungslos, insbesondere optisch oder mittels Ultraschall, unter Verwendung eines oder mehrerer Sensoren durchgeführt wird, wobei zum Lokalisieren ein von dem Roboter (12) ausgehender Prüf- oder Messkopf (14), insbesondere Multisensormesskopf, verwendet wird, wobei der zumindest eine erste Sensor (38, 40) ein Sensor aus der Gruppe optischer Sensor, wie Kamera, insbesondere 2D-Kamera, 3D-Scanner, Time-Of-Flight-Sensor, Laserliniensensor, Abstandssensor, wie Laserabstandssensor, Ultraschallabstandssensor, ist.

3. Verfahren nach Anspruch 1 oder 2,
**dadurch gekennzeichnet,**
**dass** aus einer durch die ersten und zweiten Daten ermittelten 6D-Lage des Objekts (10) bzw. Objektbereichs der den Tätigkeitsprozess durchführende Roboter oder Teil dieses zu einem durch erste Daten bestimmten Bereich des Objekts bewegt wird und den Tätigkeitsprozess durchführt, wobei vorzugsweise bei bewegtem Objekt (10) fortwährend das Objekt lokalisiert wird oder bei Bekanntsein von Bewegungsvektor und Geschwindigkeit eines bewegten Objekts (10) nach erfolgter Lokalisierung dieses weitere Lokalisierungen nicht oder im geringen Umfang erforderlich sind.

4. Verfahren nach zumindest einem der vorhergehenden Ansprüche,
**dadurch gekennzeichnet,**
**dass** als Qualitätsprüfung eine Qualitätsprüfung von Fahrzeug-Interieur-Komponenten, wie Haptikmessung, Funktionsprüfung von z.B. Klimabediengeräten, Infotainmentsystemen, Ausströmern, Touchpanels, Sitzen, und/oder Fahrzeug-Interieur-Komponenten, Steifigkeitsmessung, Spaltmessung, Tür- und Klappenprüfung, durchgeführt wird.

5. Verfahren nach zumindest einem der vorhergehenden Ansprüche,
**dadurch gekennzeichnet,**
**dass** zweite Daten des in dem Bereich des Objekts (10) durchgeführten Tätigkeitsprozesses mit durch den durchzuführenden Tätigkeitsprozess definierten ersten Daten verglichen und gegebenenfalls der Vergleich visualisiert und/oder protokolliert wird.

6. Verfahren nach zumindest einem der vorhergehenden Ansprüche,
**dadurch gekennzeichnet,**
**dass** die von dem zumindest einen ersten Sensor ermittelten zweiten Daten zur Steuerung eines weiteren Roboters (12) zur Durchführung eines weiteren Tätigkeitsprozesses, vorzugsweise in dem Bereich des Objekts (10), verwendet werden.

7. Verfahren nach zumindest einem der vorhergehenden Ansprüche,
**dadurch gekennzeichnet,**
**dass** die nach Durchführung des zumindest einen Tätigkeitsprozesses in dem Bereich des Objekts (10) ermittelten zweiten Daten des Bereichs zur Beeinflussung von ersten Daten für nachfolgend durchzuführenden Tätigkeitsprozess verwendet werden.

8. Verfahren nach zumindest einem der vorhergehenden Ansprüche,
**dadurch gekennzeichnet,**
**dass** das Messen unter Verwendung eines Kraft/Drehmomentsensors (34) und/oder zumindest eines ersten Sensors, insbesondere eines Laser-Linien-Sensors, durchgeführt wird.

9. Verfahren nach zumindest einem der vorhergehenden Ansprüche,
**dadurch gekennzeichnet,**
**dass** ein aus den ersten Daten gebildetes erstes Bild des Bereichs des Objekts im CAD-Modell von nach der Prozesstätigkeit aus einem aus den zweiten Daten gebildeten Realbild des Objekts (10) oder des Bereichs des Objekts optisch überdeckt wird oder umgekehrt-, wobei vorzugsweise. eine Augmented Reality - oder Virtuelle Reality - Visualisierung erfolgt.

10. Verfahren nach zumindest einem der vorhergehenden Ansprüche,
**dadurch gekennzeichnet,**
**dass** als Prüfkopf (14) ein solcher mit einem vorzugsweise zylinderförmigen Basiskörper (20) verwendet wird, der lösbar mit dem Roboter (12) bzw. einem Roboterflansch (16) verbunden wird, wobei insbesondere vom Mittenbereich des Basiskörpers bzw. Stirnbereich von diesem eine Adapterplatte (32) mit einem Werkzeug (36), wie Haptikwerkzeug und/oder einem Sauger und/oder einem Greifer, und/oder einem optischen Sensor ausgeht, und vorzugsweise zwischen der Adapterplatte und dem Basiskörper ein Kraft/Drehmomentsensor (34) angeordnet ist, und wobei vorzugsweise vom stirnseitigen Randbereich des Stirnbereichs des Basiskörpers eine oder mehrere Montagebereiche oder -flächen (24, 26, 28) für eine Beleuchtung und/oder einen optischen Sensor wie 2D-Kamera (40), 3D-Scanner (40), Time-Of-Flight-Sensor (40), Laserabstandssensor (38), 2D-Laser-LinienSensor (38), vorgesehen sind, wobei vorzugsweise von dem Basiskörper (20), insbesondere dessen Umfangswandung, Druckluftanschlüsse für den Sauger und/oder den Greifer ausgehen.

## Claims

1. A method for performing at least one activity process, in the form of measurement using a robot (12) on an object in the form of a vehicle (10), wherein the measurement is a quality test comprising the method steps
- providing first data in the form of data of a CAD model of the object or of an object area, or of a model of the object or the object area in a first coordinate system,
- localising the object or the object area to determine second data in a second coordinate system by means of a probe (14) extending from the robot and having at least one first sensor, wherein the second coordinate system is that of the robot (12),
- transforming the first data into the second coordinate system,
- moving the robot or a part thereof in the second coordinate system and
- performing the at least one activity process on the object or on the object area by presetting first data transformed into the second coordinate system,
**characterized in**
**that** localization is performed in multiple stages such that initially a rough localization and then a fine localization is performed, wherein the rough localization is performed by comparing data of the CAD model with measured values of at least one localization sensor from the group of first sensor (38, 40) and second sensor (54) which is stationarily arranged in a space surrounding the object (10), and fine calibration is performed by measuring at least one local feature of the object by means of the at least one first sensor, wherein center point determination, plane determination by distance measurement or angle measurement is performed at the object.

2. The method according to claim 1,
**characterized in**
**that** localization to determine the second data is performed contactlessly, in particular optically or ultrasonically, using one or more sensors, wherein a probe or measuring head (14), in particular a multisensor measuring head, extending from the robot (12) is used for localization, wherein the at least one first sensor (38, 40) is a sensor from the group of optical sensor such as a camera, in particular a 2D camera, a 3D scanner, a time-of-flight sensor, a laser line sensor or a distance sensor such as a laser distance sensor or ultrasonic distance sensor.

3. The method according to claim 1 or 2,
**characterized in**
**that** the robot or a part thereof performing the activity process is moved from a 6D position of the object (10) or object area determined from the first and second data to an area of the object determined by first data and performs the activity process, wherein the object (10) is continuously localized preferably with the moving object or, if the movement vector and the speed of a moving object (10) are known after localization thereof is completed, further localizations are not required, or if so only to a minor extent.

4. The method according to at least one of the preceding claims, **characterized in**
**that** a quality test of vehicle interior components, such as haptic measurement, function testing of, for example, air conditioning control units, infotainment systems, air diffusers, touch panels, seats and/or vehicle interior components, stiffness measurement, gap measurement, door and flap testing, is performed as the quality test.

5. The method according to at least one of the preceding claims, **characterized in**
**that** second data of the activity process performed in the area of the object (10) is compared with first data defined by the activity process to be performed, and if required the comparison is visualized and/or recorded.

6. The method according to at least one of the preceding claims, **characterized in**
**that** the second data determined by the at least one first sensor is used to control a further robot (12) for performing a further activity process, preferably in the area of the object (10).

7. The method according to at least one of the preceding claims, **characterized in**
**that** the second data of the area determined after performance of the at least one activity process in the area of the object (10) is used to influence first data for the activity process to be performed subsequently.

8. The method according to at least one of the preceding claims, **characterized in**
**that** the measurement is performed using a force/torque sensor (34) and/or at least one first sensor, in particular a laser line sensor.

9. The method according to at least one of the preceding claims, **characterized in**
**that** a first image, formed from the first data, of the area of the object in the CAD model is optically covered by a real image, formed from the second data, of the object (10) or of the area of the object after the process activity, or vice versa, wherein preferably an Augmented Reality or Virtual Reality visualization is performed.

10. The method according to at least one of the preceding claims, **characterized in**
**that** the probe (14) used is one with a preferably cylindrical base body (20) which is detachably connected to the robot (12) or to a robot flange (16), wherein an adapter plate (32) with a tool (36), such as a haptic tool and/or a suction element and/or a gripper and/or an optical sensor, extends in particular from the central area of the base body or end area thereof, and a force/torque sensor (34) is arranged preferably between the adapter plate and the base body, and wherein one or more assembly areas or surfaces (24, 26, 28) for lighting and/or for an optical sensor, such as a 2D camera (40), a 3D scanner (40), a time-of-flight sensor (40), a laser distance sensor (38) or a 2D laser line sensor (38), are provided preferably from the end-side edge area of the end area of the base body, wherein compressed air connections for the suction unit and/or for the gripper extend preferably from the base body (20), in particular from its circumferential wall.

## Revendications

1. Procédé de mise en oeuvre d'au moins un processus d'activité sous la forme d'une mesure effectuée par le biais d'un robot (12) sur un objet sous la forme d'un véhicule (10), sachant que la mesure est un contrôle de qualité, comprenant les étapes suivantes:
- mise à disposition des premières données sous la forme de données d'un modèle CAO de l'objet ou d'une zone de l'objet ou d'un modèle de l'objet ou de la zone de l'objet dans un premier système de coordonnées,
- localisation de l'objet ou de la zone de l'objet pour déterminer des secondes données dans un second système de coordonnées au moyen d'un bouton de contrôle (14) partant du robot, présentant au moins un premier capteur, sachant que le second système de coordonnées est celui du robot (12),
- conversion des premières données au second système de coordonnées,
- déplacement du robot ou d'une partie de celui-ci dans le second système de coordonnées et
- mis en oeuvre dudit au moins un processus d'activité sur l'objet ou sur la zone de l'objet par prescription des premières données converties au second système de coordonnées,
**caractérisé en ce**
**que** la localisation a lieu en plusieurs phases de sorte qu'est réalisée tout d'abord une localisation grossière, puis une localisation fine, sachant que la localisation grossière est réalisée par recoupement des données du modèle CAO avec des valeurs mesurées d'au moins un capteur de localisation provenant du groupe du premier capteur (38, 40), du second capteur (54) qui est disposé de manière stationnaire dans un local entourant l'objet (10), et que le calibrage fin est réalisé par mesure d'au moins une caractéristique locale de l'objet au moyen dudit au moins un premier capteur, sachant qu'a lieu une détermination du centre, une détermination du plan par mesure des écarts ou une mesure angulaire sur l'objet.

2. Procédé selon la revendication 1,
**caractérisé en ce**
**que** la localisation est réalisée par la détermination des secondes données sans contact, notamment de manière optique ou au moyen d'ultrasons, en utilisant un ou plusieurs capteurs, sachant qu'est utilisée, pour la localisation, une tête de mesure ou de contrôle (14) partant du robot (12), notamment une tête de mesure multi-capteurs, sachant que ledit au moins un premier capteur (38, 40) est un capteur du groupe des capteurs optiques, tels que caméra, notamment caméra 2D, scanner 3D, capteur Time-Of-Flight, capteur à ligne laser, capteur de distance, tel que capteur de distance laser, capteur de distance à ultrasons.

3. Procédé selon la revendication 1 ou 2,
**caractérisé en ce**
**qu'**à partir d'une position 6D de l'objet (10) ou de la zone de l'objet déterminée par les premières et secondes données, le robot mettant en oeuvre le processus d'activité ou une partie de celui-ci est déplacé(e) vers une zone de l'objet définie par des premières données et le processus d'activité est mis en oeuvre, sachant que l'objet est localisé en permanence de préférence en cas d'objet déplacé (10) ou qu'en cas de connaissance du vecteur de déplacement et de la vitesse d'un objet déplacé (10) après la localisation réussie de celui-ci, des localisations supplémentaires ne sont pas requises ou seulement dans une moindre mesure.

4. Procédé selon au moins l'une des revendications précédentes, **caractérisé en ce**
**qu'**est réalisé, comme contrôle de qualité, un contrôle de qualité des composants de l'habitacle du véhicule, tels que mesure haptique, contrôle du fonctionnement par ex. des appareils de commande de la climatisation, des systèmes d'infodivertissement, des diffuseurs, des panneaux tactiles, des sièges et/ou des composants de l'habitacle du véhicule, mesure de la rigidité, mesure des jeux d'ouverture, contrôle des portes et hayons.

5. Procédé selon au moins l'une des revendications précédentes, **caractérisé en ce**
**que** des deuxièmes données du processus d'activité mis en oeuvre dans la zone de l'objet (10) sont comparées aux premières données définies par le processus d'activité à mettre en oeuvre et que, le cas échéant, la comparaison est visualisé et/ou journalisée.

6. Procédé selon au moins l'une des revendications précédentes, **caractérisé en ce**
**que** les secondes données déterminées par ledit au moins un premier capteur sont utilisées pour commander un autre robot (12) afin de mettre en oeuvre un autre processus d'activité, de préférence dans la zone de l'objet (10).

7. Procédé selon au moins l'une des revendications précédentes, **caractérisé en ce**
**que** les secondes données de la zone déterminées pour mettre en oeuvre ledit au moins un processus d'activité dans la zone de l'objet (10) sont utilisées pour influencer les premières données pour le processus d'activité à mettre en oeuvre ensuite.

8. Procédé selon au moins l'une des revendications précédentes, **caractérisé en ce**
**que** la mesure est réalisée en utilisant un capteur de force/couple (34) et/ou au moins un premier capteur, notamment un capteur à ligne laser.

9. Procédé selon au moins l'une des revendications précédentes, **caractérisé en ce**
**qu'**une première image de la zone de l'objet, formée à partir des premières données est recouverte optiquement dans le modèle CAO par l'image réelle de l'objet (10) ou de la zone de l'objet formée après l'activité de processus à partir des secondes données ou inversement, sachant que de préférence, une visualisation en réalité augmentée ou en réalité virtuelle a lieu.

10. Procédé selon au moins l'une des revendications précédentes, **caractérisé en ce**
**qu'**est utilisé, comme tête de contrôle (14), un corps de base (20) de préférence de forme cylindrique tel qu'il est relié de manière amovible au robot (12) ou à une bride de robot (16), sachant que part notamment de la zone centrale du corps de base ou de la zone frontale de celui-ci, une plaque d'adaptation (32) avec un outil (36), tel qu'un outil haptique et/ou une ventouse et/ou un préhenseur, et/ou un capteur optique, et qu'un capteur de force/couple (34) est disposé de préférence entre la plaque d'adaptation et le corps de base, et sachant que sont prévues, de préférence depuis le bord côté frontal de la zone frontale du corps de base, une ou plusieurs zones ou surfaces de montage (24, 26, 28) pour un éclairage et/ou un capteur optique tel que caméra 2D (40), scanner 3D (40), capteur Time-Of-Flight (40), capteur de distance à laser (38), capteur à ligne laser 2D (38), sachant que partent, de préférence du corps de base (20) notamment de sa paroi circonférentielle, des raccords d'air comprimé pour la ventouse et/ou le préhenseur.
